# NEUE EUROPÄISCHE PATENTSCHRIFT

(11) **EP 0 531 463 B2**
(45) Veröffentlichungstag und Bekanntmachung des Hinweises auf die Entscheidung über den Einspruch: **05.11.1997**
(45) Hinweis auf die Patenterteilung: 31.08.1994
(21) Anmeldenummer: 91921018.7
(22) Anmeldetag: 06.05.1991
(51) Int. Cl.: C09D 201/00, C09D 183/06, C09D 183/08

(54) **LACKE UND VERWENDUNG DIESER LACKE ALS DECKLACKE ZUR LACKIERUNG VON AUTOMOBILKAROSSERIEN**
LACQUER AND USE OF THIS LACQUER AS A FINISHING LACQUER FOR LACQUERING AUTOMOBILE BODIES
LAQUE ET SON UTILISATION COMME LAQUE DE FINITION POUR LE LAQUAGE DE CARROSSERIES D'AUTOMOBILES

(30) Priorität: 26.05.1990 DE 4017075
(43) Veröffentlichungstag der Anmeldung: 17.03.1993
(73) Patentinhaber: BASF Lacke + Farben AG, 48165 Münster-Hiltrup (DE)
(72) Erfinder: KLIER, Konrad, NL-2553 PH Den Haag (NL); BETZ, Peter, D-4400 Münster (DE)
(74) Vertreter: Münch, Volker, Dr.
(86) Internationale Anmeldenummer: EP9100852
(87) Internationale Veröffentlichungsnummer: WO9118954

(56) Entgegenhaltungen:
- EP-A- 0 119 482
- EP-A- 0 217 364
- EP-A- 0 327 886
- EP-A- 0 329 260
- DE-A- 2 734 106
- DE-A- 3 629 061
- DE-B- 1 080 782
- HU-A- 50 202
- US-A- 4 774 278
- Datenblätter "Tegomer Reactive Intermediates", 01/89 der Fa. Th. Goldschmidt
- VI. FATIPEC-Kongress, Verlag Chemie 1962, S. 332-337

## Beschreibung

Die Erfindung betrifft Lacke und die Verwendung dieser Lacke als Decklacke zur Lackierung von Automobilkarosserien.

Automobilkarosserien werden üblicherweise wenigstens mit einem Elektrotauchlack, einem Füller, gegebenenfalls einem Metalleffekt- oder Uni-Basislack und einem Decklack lackiert.
In den Fällen, in denen ein Metalleffektlack- oder Uni-Basislack appliziert worden ist. wird ein Klarlack als Decklack aufgebracht. In allen anderen Fällen besteht der Decklack aus einem Uni-Lack.

An die Decklackierung von Automobilkarosserien werden hohe Ansprüche gestellt. Sie soll dem Automobil ein möglichst attraktives Erscheinungsbild verleihen und gleichzeitig gegen äußere Einflüsse resistent sein.

Die der vorliegenden Erfindung zugrundeliegende Aufgabenstellung besteht in der Bereitstellung von Lacken, insbesondere von Klarlacken. die als Decklacke zur Lackierung von Automobilkarosserien eingesetzt werden können und mit denen Decklackierungen hergestellt werden können. die im Vergleich zu Decklackierungen des Standes der Technik verbesserte Eigenschaften, insbesondere verbesserte Säurebeständigkeit und oder verbesserte wasserabstoßende Eigenschaften und oder verbesserte Wetterbeständigkeit und oder verbesserte Beständigkeit gegen mechanische Belastungen. die beim Reinigen der Decklakkierungen mittels Bürsten (verbesserte "Bürstenbeständigkeit") auftreten, aufweisen.

Diese Aufgabe wird überraschenderweise durch die Bereitstellung von Lacken gelöst. die dadurch gekennzeichnet sind, daß sie eine Verbindung der allgemeinen Formel (I) oder eine Mischung aus Verbindungen der allgemeinen Formel (I) enthalten, wobei die allgemeine Formel (I) 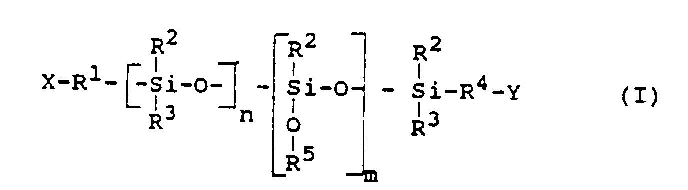 lautet und n, m, X, R¹, R², R³, R⁴, R⁵ und Y folgende Bedeutung haben:
- n steht für einen Zahlenwert zwischen 2 und 25, vorzugsweise für einen Zahlenwert zwischen 5 und 15
- m steht für einen Zahlenwert von 0 bis 5
- X und Y können gleich oder verschieden sein und stehen für eine Hydroxyl-, Carboxyl- oder NCO-Gruppe
- R¹ und R⁴ können gleich oder verschieden sein und stehen für einen Alkylenrest, vorzugsweise für einen Alkylenrest mit 1 bis 6 C-Atomen oder für einen Arylenrest, vorzugsweise für einen Phenylenrest
- R² und R³ können gleich oder verschieden sein und stehen für einen Alkylrest, vorzugsweise für einen Alkylrest mit 1 bis 3 C-Atomen oder für einen Arylrest, vorzugsweise für einen Phenylrest
- R5 steht für 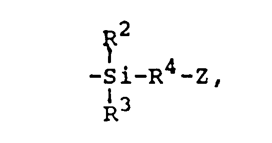 wobei z für X, Y oder R² steht.
   Lacke, die eine Verbindung der Formel

   OH-CH₂-CH₂-CH₂-(Si(CH₃)₂-0-)ₙ-Si(CH₃)₂-CH₂-CH₂-CH₂-OH
in der n für einen Zahlenwert zwischen 10 und 14, vorzugsweise für einen Zahlenwert zwischen 11 und 13, besonders bevorzugt für einen Zahlenwert zwischen 11,5 und 12,5 steht, enthalten, liefern besonders vorteilhafte Lackierungen.

Die erfindungsgemäß eingesetzten Siloxanverbindungen sind im Handel erhältlich. Hersteller derartiger Verbindungen sind beispielsweise Th. Goldschmidt AG, Efka Chemicals B.V. und Dow Corning Corporation Europe, Brüssel.

Die erfindungsgemäß eingesetzten Siloxanverbindungen werden zweckmäßigerweise in Mengen von 0,01 bis 4,0 vorzugsweise 0,5 bis 2,5 Gew.-% oder 0,2 bis 2,5 Gew.-% in bekannte, für die Decklackierung von Automobilkarosserien geeignete Lacke eingearbeitet, wobei die Gewichtsprozentangaben auf den Gesamtfeststoffgehalt an Bindemittel und Vernetzungsmittel bezogen sind. Die Lacke können sowohl konventionell (d.h. auf Basis organischer Lösemittel) als auch wäßrig sein.

Die erfindungsgemäß eingesetzten Siloxanverbindungen werden vorzugsweise in Lacke eingearbeitet, die ein hydroxylgruppenhaltiges Polyacrylatharz oder eine Mischung aus hydroxylgruppenhaltigen Polyacrylatharzen und/oder ein hydroxylgruppenhaltiges Polyesterharz oder eine Mischung aus hydroxylgruppenhaltigen Polyesterharzen und/oder ein hydroxylgruppenhaltiges Alkydharz oder eine Mischung aus hydroxylgruppenhaltigen Alkydharzen als Bindemittel und ein Aminoplastharz, vorzugsweise ein Melaminformaldehydharz oder eine Mischung aus Aminoplastharzen bzw. eine Mischung aus Melaminformaldehydharzen oder ein Polyisocyanat oder eine Mischung aus Polyisocyanaten als Vernetzungsmittel enthalten.

Die hydroxylgruppenhaltigen Polyacrylatharze sollten eine Hydroxylzahl von 50 bis 200, vorzugsweise 70 bis 150, eine Säurezahl von 0 bis 30 und ein zahlenmittleres Molekulargewicht von 5.000 bis 50.000 aufweisen. Die hydroxylgruppenhaltigen Polyester sollten eine Hydroxylzahl von 90 bis 150, vorzugsweise von 70 bis 130, eine Säurezahl von 10 bis 25 und ein zahlenmittleres Molekulargewicht von 500 bis 3.000 aufweisen. Die hydroxylgruppenhaltigen Alkydharze sollten eine Hydroxylzahl von 90 bis 130 und ein zahlenmittleres Molekulargewicht von 1.000 bis 15.000 aufweisen.

Wenn Aminoplastharze bzw. Melaminharze als Vernetzungsmittel eingesetzt werden, dann werden in der Regel veretherte Aminoplastharze bzw. veretherte Melaminharze als Vernetzungsmittel eingesetzt. Lacke mit Aminoplastharzen bzw. Melaminharzen als Vernetzungsmittel werden üblicherweise als Einkomponentenlacke eingesetzt. Wenn Polyisocyanate als Vernetzungsmittel eingesetzt werden, dann werden vorzugsweise aliphatische oder cycloaliphatische Polyisocyanate als Vernetzungsmittel eingesetzt. Lacke mit Polyisocyanaten als Vernetzungsmittel werden üblicherweise als Zweikomponentenlacke eingesetzt.

Lacke der oben beschriebenen Art sind bekannt und werden sowohl zur Serien als auch zur Reparaturlackierung eingesetzt. Sie können alle üblichen Pigmente und Zusätze wie z.B. Lichtschutzmittel, Verlaufshilfsmittel usw. enthalten. Die erfindungsgemäß eingesetzten Siloxanverbindungen werden vorzugsweise in Lacken, die keine bzw. nur transparente Pigmente enthalten (d.h. in Klarlacken) zur Verbesserung der Eigenschaften, insbesondere zur Verbesserung der Säurebeständigkeit und/oder Bürstenbeständigkeit und/oder wasserabstoßenden Eigenschaften und/oder Wetterbeständigkeit der aus diesen Lacken hergestellten Lackfilme eingesetzt.

Überraschenderweise wurde festgestellt, daß die erfindungsgemäß eingesetzten Siloxanverbindungen in Kombination mit Lichtzschutzmitteln (insbesondere Lichtschutzmitteln auf Basis von Mischungen aus UV-Absorbern (insbesondere flüssigen Benzotriazolen) und Radikalfängern vom HALS-Typ (Hindered Amine Light Stabilizer)) die Wetterbeständigkeit, insbesondere die Glanzhaltung von Klarlacken erhöhen. Zur Verbesserung der Wetterbeständigkeit ist es zweckmäßig 0,001 bis 3,0, vorzugsweise 0,02 bis 1,0 Gew.-% der erfindungsgemäßen Siloxanverbindungen in die Klarlacke einzuarbeiten. Die in Kombination mit den erfindungsgemäßen Siloxanverbindungen einzusetzenden Lichtschutzmittel bzw. Mischungen aus unterschiedlichen Lichtschutzmitteln können in üblichen Mengen eingesetzt werden (Beispielsweise etwa 3,0 bis etwa 6,0 Gew.-% eines Benzotriazols in Kombination mit etwa 1,0 bis etwa 3,0 Gew.-% eines Radikalfängers vom HALS-Typ; die Gewichtsprozentangaben beziehen sich auf den Gesamtfeststoffgehalt an Bindemittel und Vernetzungsmittel).

Mit Hilfe der erfindungsgemäßen Siloxanverbindungen kann auch die Wetterbeständigkeit von pigmentierten Lacken verbessert werden. Hinsichtlich der Einsatzmengen an Siloxanverbindung und Lichtschutzmittel gilt das oben Gesagte.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung von für die Decklackierung von Automobilkarosserien geeigneten Einkomponenten Klarlacken

Die in der folgenden Tabelle aufgeführten Bestandteile werden in den in der Tabelle angegebenen Mengen (in Gewichtsteilen) gemischt.

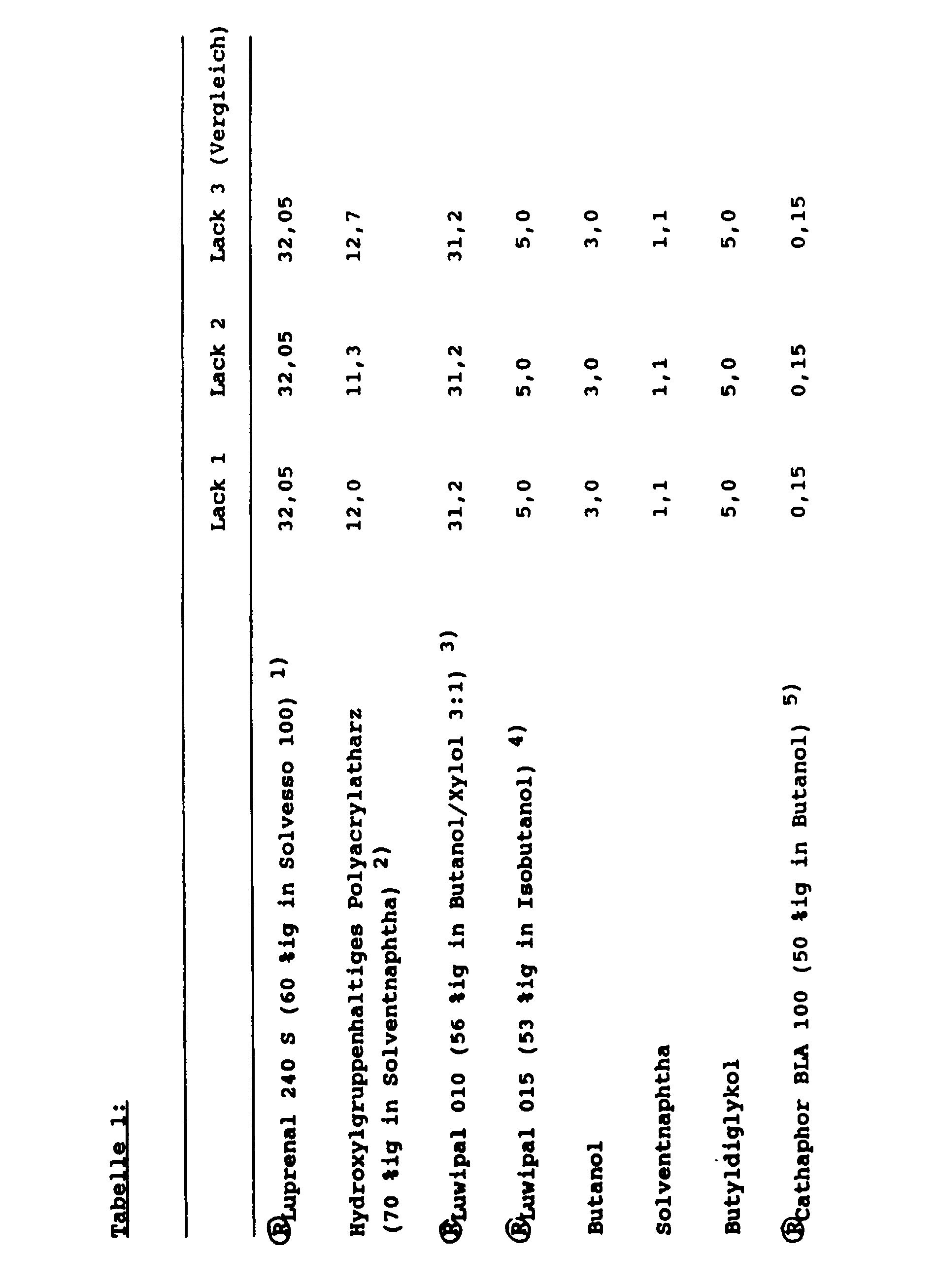

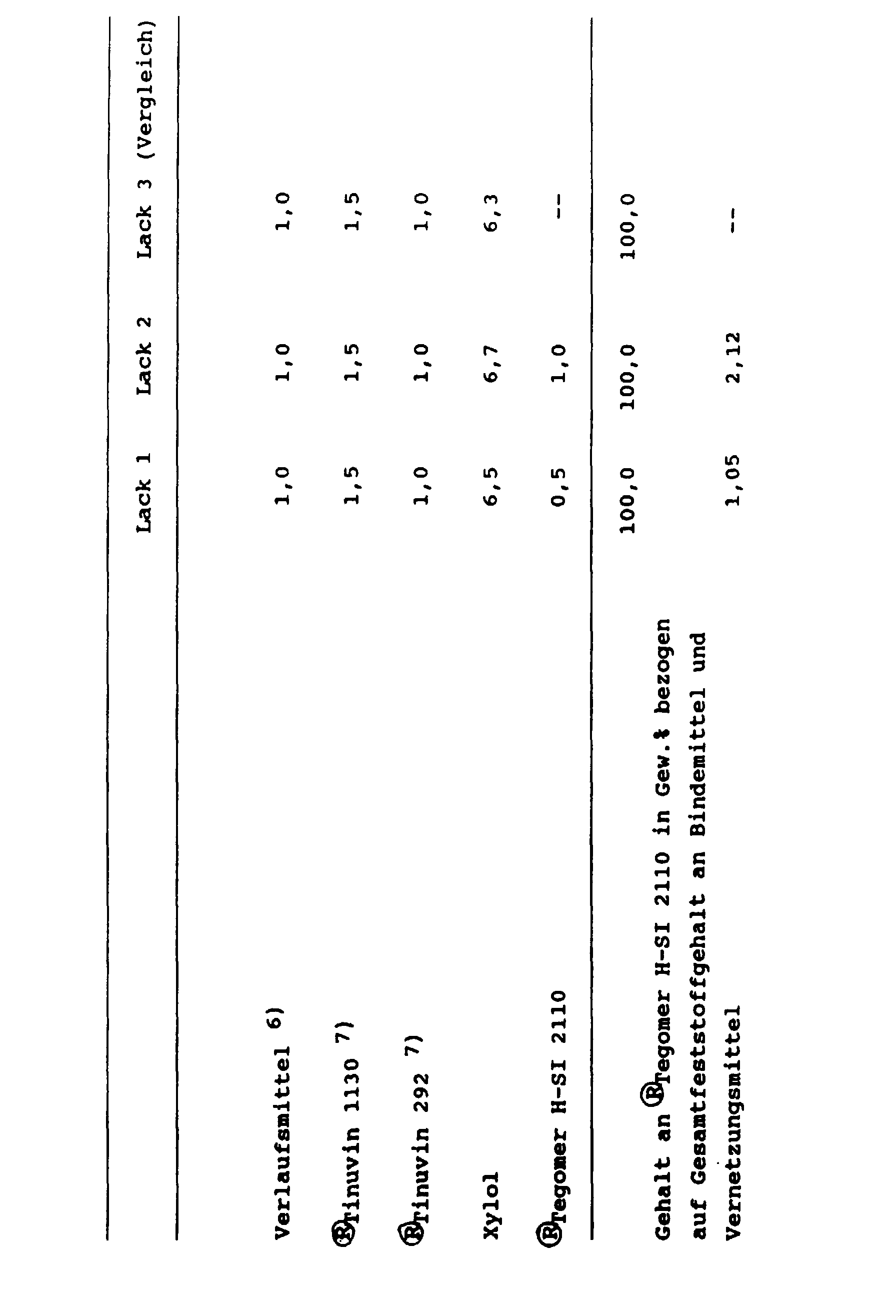

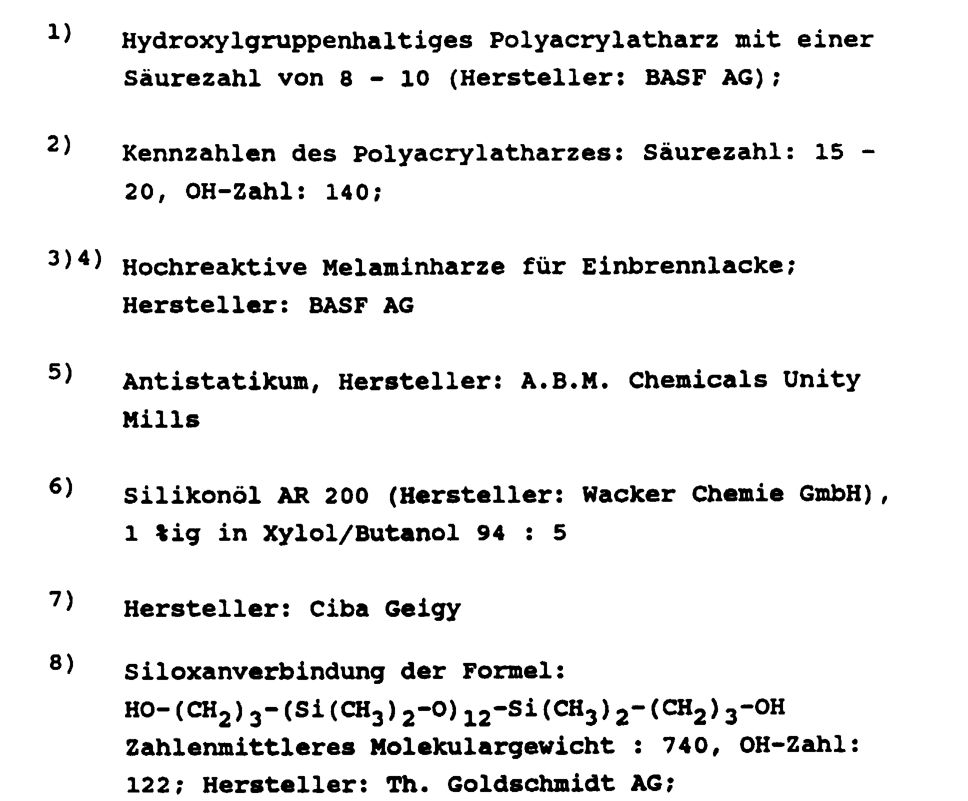

Die gemäß Tabelle 1 hergestellten Klarlacke werden mit einem Gemisch aus Solventnaphtha/Xylol/Butylacetat/Dipentene/Glykolsäurebutylester 54:12:20:9:5 auf eine Viskosität von 30 sec im Ford Cup 4 eingestellt und auf ein mit einem handelsüblichen Füller (Trockenfilmdicke 40-50 µm) und mit einem handelsüblichen Metalleffekt-Basislack beschichtetes Stahlblech (Bonder 132) gespritzt und 20 min bei 140°C eingebrannt. Die Trockenfilmdicke des Basislackes soll 15 bis 20 µm betragen und die Trockenfilmdicke der Klarlacke soll 40 µm betragen.
Die so erhaltenen Klarlackschichten wurden auf ihre Säurebeständigkeit und Bürstenbeständigkeit hin geprüft. Zur Prüfung auf Säurebeständigkeit wird 1 %ige Schwefelsäure auf die Klarlackschichten gebracht. Die so behandelten Klarlackschichten werden dann 30 Minuten in einem Ofen mit Temperaturgradienten erhitzt. Dann wird die Temperatur bestimmt, bei der erstmalig Anätzung zu beobachten ist.

Die mit Lack 3 hergestellte Klarlackschicht zeigt schon unter 38°C Anätzungserscheinungen, wohingegen bei den mit den Lacken 1 und 2 hergestellten Lackschichten erst bei 41°C bzw. 43°C Anätzungen sichtbar sind.

Zur Prüfung der Bürtstenbeständigkeit werden die Klarlackschichten mit 200 Doppelhüben einer zur Reinigung von Automobildecklackierungen üblichen Bürste (Andruckkraft 1 kg, 25 Umdrehungen/min) belastet. Danach wurde die Oberfläche der Klarlackschichten beurteilt. Die mit Lack 3 hergestellte Klarlackschicht wurde mehr in Mitleidenschaft gezogen als die mit den Lacken 1 und 2 hergestellten Klarlackschichten.

Zur Prüfung der wasserabstoßenden Eigenschaften wird ein Wassertropfen auf die Klarlackoberfläche aufgebracht. Zehn Sekunden nach dem Aufbringen des Wassertropfens wird dann der Winkel (Randwinkel, contact angle), den der Wassertropfen mit der Klarlackoberfläche bildet, gemessen. Bei den mit Lack 1 und Lack 2 hergestellten Klarlackschichten wurde ein größerer Randwinkel gemessen als bei der mit Lack 3 hergestellten Klarlackschicht.

### 2. Herstellung von für die Decklackierung von Automobilkarosserien geeigneten Zweikomponenten Klarlacken

Die in der folgenden Tabelle 2 aufgeführten Bestandteile werden in den in der Tabelle angegebenen Mengen (in Gewichtsteilen) zu Stammlacken gemischt.

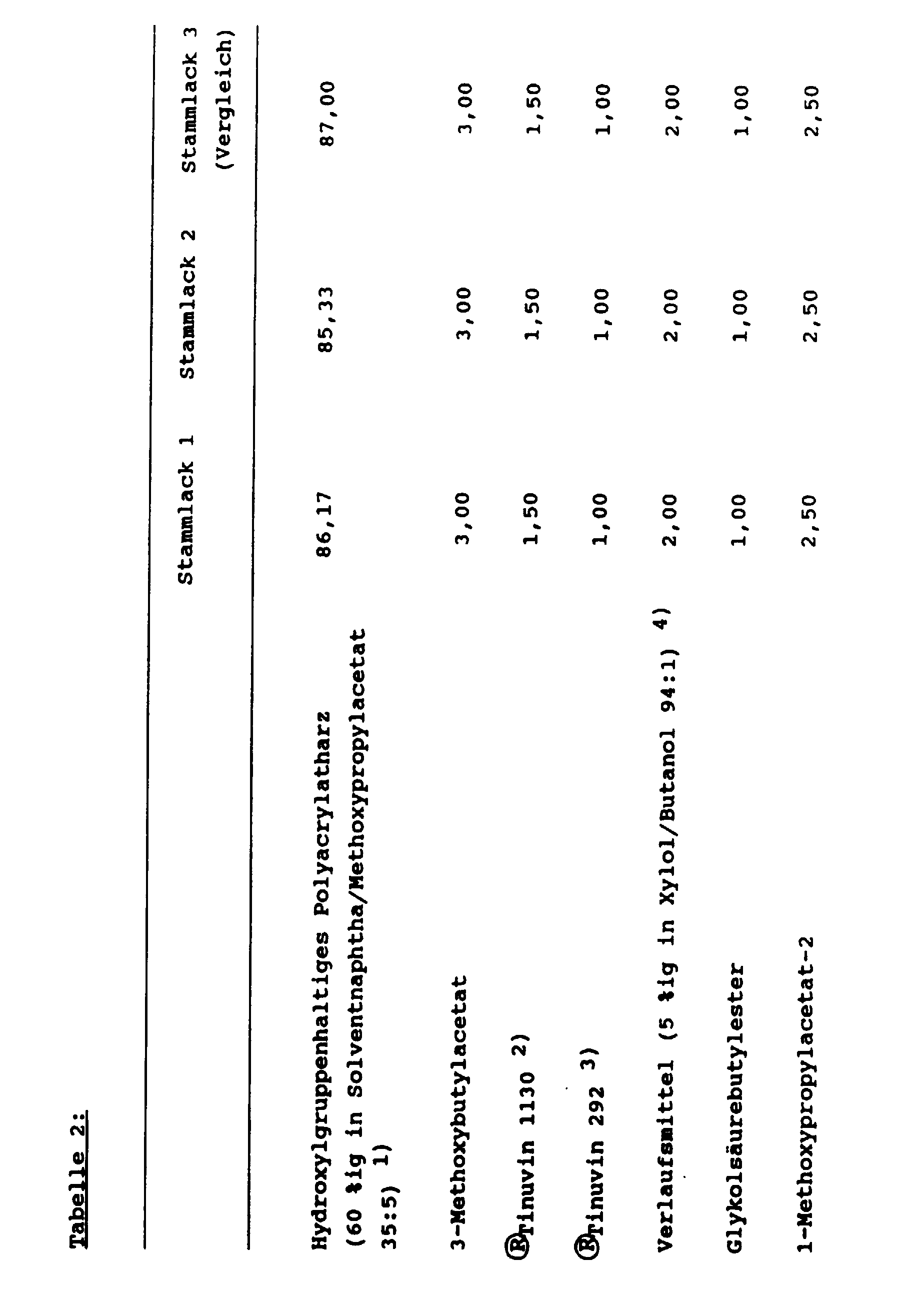

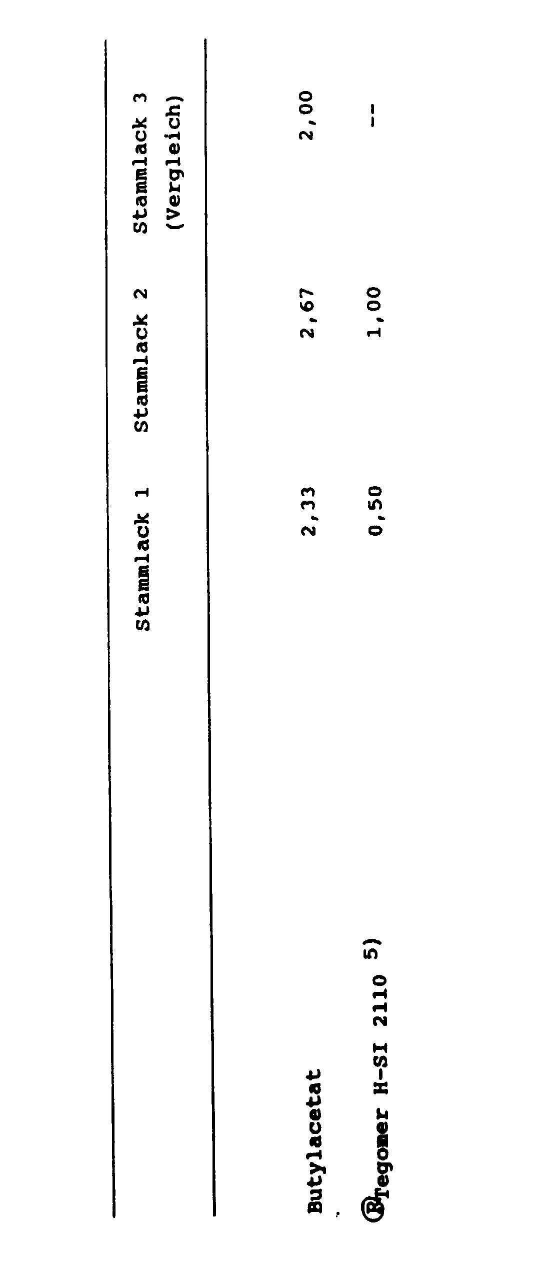

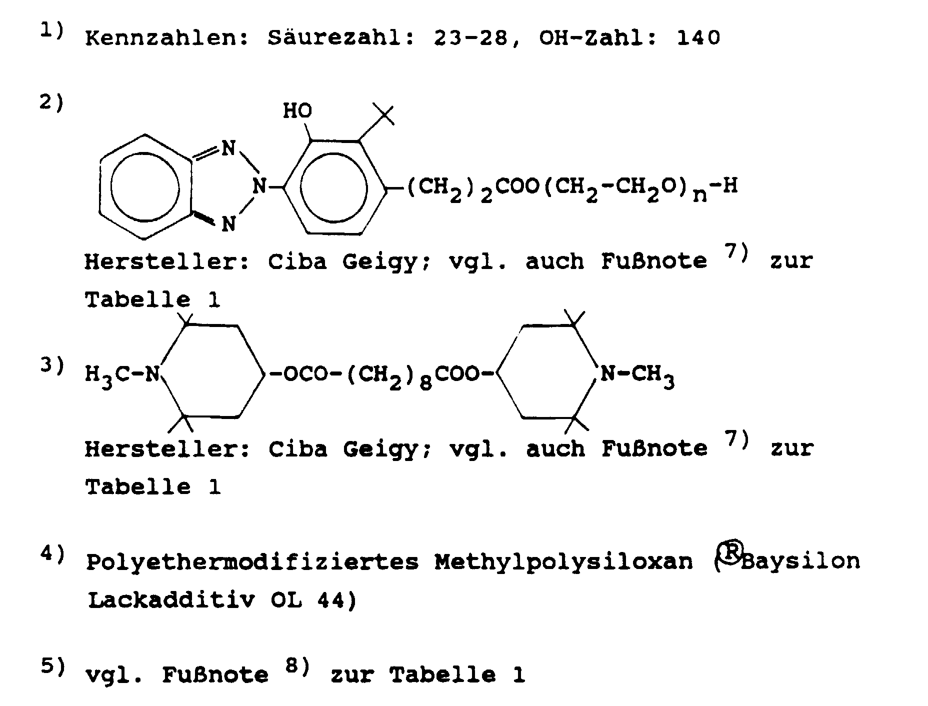

Die gemäß Tabelle 2 hergestellten Stammlacke werden mit 29,96 (Stammlack 1), 29,93 (Stammlack 2) und 30,00 (Stammlack 3) Gewichsteilen einer Lösung von ®Desmodur N 3390 (aliphatisches Polyisocyanat; Hersteller: Bayer AG) in Butylacetat/Solventnaphtha versetzt. Die Lösung von ®Desmodur N 3390 wird hergestellt, indem 89 Gewichtsteile einer 90 %igen Lösung von ®Desmodur N 3390 in Butylacetat/Solventnaphtha (1:1) mit weiteren 5,5 Gewichtsteilen Butylacetat und 5,5 Gewichtsteilen Solventnaphtha verdünnt werden.
(Der Gehalt an ®Tegomer H-SI 2110 in Gew.% bezogen auf Gesamtfeststoffgehalt an Bindemittel und Vernetzungsmittel beträgt bei Lack 1 0,66 Gew.%, bei Lack 2 1,33 Gew.% und bei Lack 3 0 Gew.%)
Die auf die oben beschriebene Weise mit Isocyanat vermischten Stammlacke werden mit Butylacetat auf eine Viskosität von 20 sec im DIN4 Becher eingestellt und auf ein mit einem handelsüblichen Füller (Trockenfilmdicke 40-50 µm) und mit einem handelsüblichen Metalleffekt-Basislack beschichtetes Stahlblech (Bonder 132) gespritzt und 20 min bei 140°C eingebrannt. Die Trockenfilmdicke des Basislackes soll 15 bis 20 µm betragen und die Trockenfilmdicke der Klarlacke soll 40 µm betragen.
Die so erhaltenen Klarlackschichten wurden auf ihre Säurebeständigkeit und Bürstenbeständigkeit hin geprüft. Zur Prüfung auf Säurebeständigkeit wird 1 %ige Schwefelsäure auf die Klarlackschichten gebracht. Die so behandelten Klarlackschichten werden dann 30 Minuten in einem Ofen mit Temperaturgradienten erhitzt. Dann wird die Temperatur bestimmt, bei der erstmalig Anätzung zu beobachten ist.

Die mit Lack 3 hergestellte Klarlackschicht zeigt schon unter 44°C Anätzungserscheinungen, wohingegen bei den mit den Lacken 1 und 2 hergestellten Lackschichten erst bei 50°C bzw. 52°C Anätzungen sichtbar sind.

Zur Prüfung der Bürstenbeständigkeit werden die Klarlackschichten mit 200 Doppelhüben einer zur Reinigung von Automobildecklackierungen üblichen Bürste- (Andruckkraft 1 kg, 25 Umdrehungen/min) belastet. Danach wurde die Oberfläche der Klarlackschichten beurteilt. Die mit Lack 3 hergestellte Klarlackschicht wurde mehr in Mitleidenschaft gezogen als die mit den Lacken 1 und 2 hergestellten Klarlackschichten.

Zur Prüfung der wasserabstoßenden Eigenschaften wird ein Wassertropfen auf die Klarlackoberfläche aufgebracht. Zehn Sekunden nach dem Aufbringen des Wassertropfens wird dann der Winkel (Randwinkel, contact angle), den der Wassertropfen mit der Klarlackoberfläche bildet, gemessen. Bei den mit Lack 1 und Lack 2 hergestellten Klarlackschichten wurde ein größerer Randwinkel als bei der mit Lack 3 hergestellten Klarlackschicht gemessen.

Zur Prüfung der Wetterbeständigkeit werden die mit den Klarlackschichten lackierten Bleche in einem Bewitterungsgerät (UVCON, ATLAS ELECTRIC, 8 Fluoreszenz-Lampen, Typ FS 40 à 40 Watt: Lichtphase 8 Stunden. Dunkelphase 4 Stunden. Black-Panel-Temperatur Lichtphase 70°C, Dunkelphase 50°C, Relative Luftfeuchte: Lichtphase: 0 %, Dunkelphase 100%) belastet. Überraschenderweise zeigen die mit Lack 1 und 2 hergestellten Klarlackfilme im Vergleich zu dem mit Lack 3 hergestellten Klarlackfilm eine verbesserte Glanzhaltung Glanzgrad (20°) nach 1000 h Belastung: Lack 1: 73; Lack 2: 67; Lack 3: 56).

## Patentansprüche

1. Lacke, enthaltend eine Verbindung der allgemeinen Formel (I) oder eine Mischung aus Verbindungen der allgemeinen Formel (I), wobei die allgemeine Formel (I) 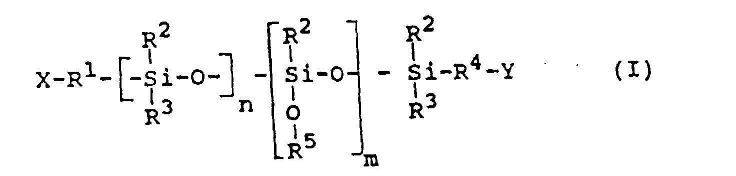 lautet und n, m, X, R¹, R², R³, R⁴, R⁵ und Y folgende Bedeutung haben:
- n steht für einen Zahlenwert zwischen 2 und 25, vorzugsweise für einen Zahlenwert zwischen 5 und 15
- m steht für einen Zahlenwert von 0 bis 5
- X und Y können gleich oder verschieden sein und stehen für eine Hydroxyl-, Carboxyl- oder NCO-Gruppe
- R¹ und R⁴ können gleich oder verschieden sein und stehen für einen Alkylenrest, vorzugsweise für einen Alkylenrest mit 1 bis 6 C-Atomen oder für einen Arylenrest, vorzugsweise für einen Phenylenrest
- R² und R³ können gleich oder verschieden sein und stehen für einen Alkylrest, vorzugsweise für einen Alkylrest mit 1 bis 3 C-Atomen oder für einen Arylrest, vorzugsweise für einen Phenylrest
- R⁵ steht für 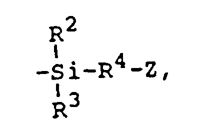 wobei Z für X, Y oder R² steht.

2. Lacke nach Anspruch 1, dadurch gekennzeichnet, daß die Gruppen X und Y beide für eine Hydroxylgruppe stehen.

3. Lacke nach Anspruch 1 oder 2, dadurch gekennzeichnet, daß in der allgemeinen Formel (I) n, X, R¹, R², R³, R⁴ und Y folgende Bedeutung haben:
- n steht für einen Zahlenwert zwischen 10 und 14, vorzugsweise für einen Zahlenwert zwischen 11 und 13, besonders bevorzugt für einen Zahlenwert zwischen 11,5 und 12,5
- X und Y stehen beide für eine Hydroxylgruppe
- R¹ und R⁴ stehen beide für eine -CH₂-CH₂-CH₂-Gruppe
- R² und R³ stehen beide für eine Methylgruppe

4. Lacke nach einem der Ansprüche 1 bis 3, dadurch gekennzeichnet, daß sie 0,01 bis 4,0, vorzugsweise 0,2 bis 2,5 Gew.% der Verbindung der allgemeinen Formel (I) bzw. der Mischung aus Verbindungen der allgemeinen Formel (I) enthalten, wobei die Gewichtsprozentangaben auf den Gesamtfeststoffgehalt an Bindemittel und Vernetzungsmittel bezogen sind.

5. Lacke nach einem der Ansprüche 1 bis 4, dadurch gekennzeichnet, daß sie ein hydroxylgruppenhaltiges Polyacrylatharz oder eine Mischung aus hydroxylgruppenhaltigen Polyacrylatharzen als Bindemittel enthalten.

6. Lacke nach einem der Ansprüche 1 bis 5, dadurch gekennzeichnet, daß sie ein hydroxylgruppenhaltiges Polyesterharz, eine Mischung aus hydroxylgruppenhaltigen Polyesterharzen, ein hydroxylgruppenhaltiges Alkydharz oder eine Mischung aus hydroxylgruppenhaltigen Alkydharzen als Bindemittel enthalten.

7. Lacke nach einem der Ansprüche 1 bis 6, dadurch gekennzeichnet, daß sie ein Aminoplastharz, vorzugsweise ein Melaminformaldehydharz oder eine Mischung aus Aminoplastharzen bzw. eine Mischung aus Melaminformaldehydharzen als Vernetzungsmittel enthalten.

8. Lacke nach einem der Ansprüche 1 bis 7, dadurch gekennzeichnet, daß sie ein Polyisocyanat oder eine Mischung aus Polyisocyanaten als Vernetzungsmittel enthalten.

9. Lacke nach einem der Ansprüche 1 bis 8, dadurch gekennzeichnet, daß sie keine oder nur transparente Pigmente enthalten.

10. Verwendung der Lacke nach einem der Ansprüche 1 bis 9 als Decklacke zur Lackierung von Automobilkarosserien.

11. Verwendung der Lacke nach Anspruch 9 als Klarlacke zur Lackierung von Automobilkarosserien.

12. Verwendung von Verbindungen der allgemeinen Formel (I) oder einer Mischung aus Verbindungen der allgemeinen Formel (I) zur Verbesserung der Eigenschaften von Automobildecklackierungen, wobei die allgemeine Formel (I) 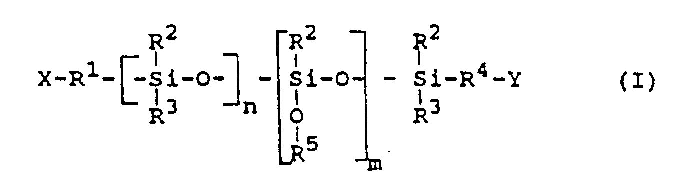 lautet und n, m, X, R¹, R², R³, R⁴, R⁵ und Y folgende Bedeutung haben:
- n steht für einen Zahlenwert zwischen 2 und 25, vorzugsweise für einen Zahlenwert zwischen 5 und 15
- m steht für einen Zahlenwert von 0 bis 5
- X und Y können gleich oder verschieden sein und stehen für eine Hydroxyl- Carboxyl- oder NCO-Gruppe
- R¹ und R⁴ können gleich oder verschieden sein und stehen für einen Alkylenrest, vorzugsweise für einen Alkylenrest mit 1 bis 6 C-Atomen oder für einen Arylenrest, vorzugsweise für einen Phenylenrest
- R² und R³ können gleich oder verschieden sein und stehen für einen Alkylrest, vorzugsweise für einen Alkylrest mit 1 bis 3 C-Atomen oder für einen Arylrest, vorzugsweise für einen Phenylrest
- R⁵ steht für 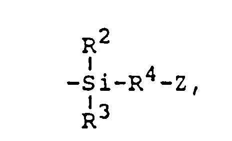 wobei Z für X, Y oder R² steht.

## Claims

1. Paint which contains a compound of the general formula (I) or a mixture of compounds of the general formula (I), the general formula (I) being 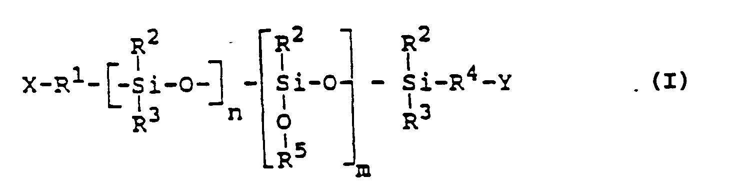 and n, m, X, R¹, R², R³, R⁴, R⁵ and Y having the following meaning:
- n stands for a number between 2 and 25, preferably for a number between 5 and 15
- m stands for a number from 0 to 5
- X and Y can be identical or different and stand for a hydroxyl, carboxyl or NCO group
- R¹ and R⁴ can be identical or different and stand for an alkylene radical, preferably for an alkylene radical having 1 to 6 carbon atoms, or for an arylene radical, preferably a phenylene radical
- R² and R³ can be identical or different and stand for an alkyl radical, preferably for an alkyl radical having 1 to 3 carbon atoms, or for an aryl radical, preferably for a phenyl radical
- R⁵ stands for 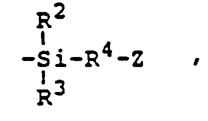 Z standing for X, Y or R².

2. Paint according to Claim 1, characterized in that the groups X and Y both stand for a hydroxyl group.

3. Paint according to Claim 1 or 2, characterized in that in the general formula (I) n, X, R¹, R², R³, R⁴ and Y have the following meaning:
- n stands for a number between 10 and 14, preferably for a number between 11 and 13, particularly preferably for a number between 11.5 and 12.5
- - X and Y both stand for a hydroxyl group
- R¹ and R⁴ both stand for a -CH₂-CH₂-CH₂- group
- R² and R³ both stand for a methyl group.

4. Paint according to any one of Claims 1 to 3, characterized in that it contains 0.01 to 4.0, preferably 0.2 to 2.5, % by weight of the compound of the general formula (I) or of the mixture of compounds of the general formula (I), the percentages by weight being based on the total solids content of binder and crosslinking agent.

5. Paint according to any one of Claims 1 to 4, characterized in that it contains a hydroxyl-containing polyacrylate resin or a mixture of hydroxyl-containing polyacrylate resins as binder.

6. Paint according to any one of Claims 1 to 5, characterized in that it contains a hydroxyl-containing polyester resin, a mixture of hydroxyl-containing polyester resins, a hydroxyl-containing alkyd resin or a mixture of hydroxyl-containing alkyd resins as binder.

7. Paint according to any one of Claims 1 to 6, characterized in that it contains an amino resin, preferably a melamine-formaldehyde resin or a mixture of amino resins or a mixture of melamine-formaldehyde resins as crosslinking agent.

8. Paint according to any one of Claims 1 to 7, characterized in that it contains a polyisocyanate or a mixture of polyisocyanates as crosslinking agent.

9. Paint according to any one of Claims 1 to 8, characterized in that it contains no pigments or only transparent pigments.

10. The use of the paint according to any one of Claims 1 to 9 as a topcoat for the finishing of automobile bodies.

11. The use of the paint according to Claim 9 as a clearcoat for the finishing of automobile bodies.

12. The use of compounds of the general formula (I) or a mixture of compounds of the general formula (I) for improving the characteristics of automobile topcoat finishes, the general formula (I) being 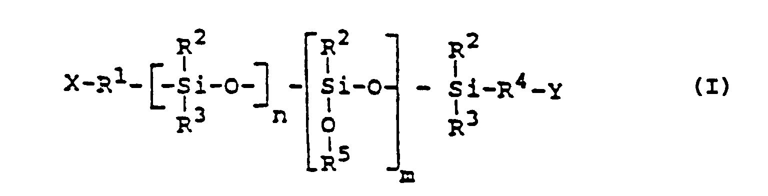 and n, m, X, R¹, R², R³, R⁴, R⁵ and Y having the following meaning:
- n stands for a number between 2 and 25, preferably for a number between 5 and 15
- m stands for a number from 0 to 5
- X and Y can be identical or different and stand for a hydroxyl, carboxyl or NCO group
- R¹ and R⁴ can be identical or different and stand for an alkylene radical, preferably for an alkylene radical having 1 to 6 carbon atoms, or for an arylene radical, preferably a phenylene radical
- R² and R³ can be identical or different and stand for an alkyl radical, preferably for an alkyl radical having 1 to 3 carbon atoms, or for an aryl radical, preferably for a phenyl radical
- R⁵ stands for 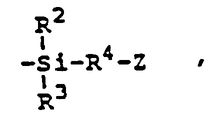 Z standing for X, Y or R².

## Revendications

1. Laques, contenant un composé de formule générale (I) ou un mélange de composés de formule générale (I), la formule générale (I) étant 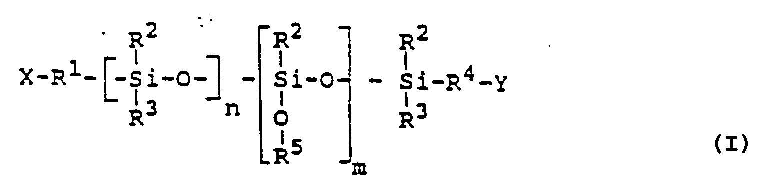 et n, m, X, R¹, R², R³, R⁴, R⁵ et Y ayant les significations suivantes:
- n représente une valeur numérique comprise entre 2 et 25, de préférence une valeur numérique comprise entre 5 et 15
- m représente une valeur numérique de 0 à 5
- X et Y peuvent être égaux ou différents et représentent un groupe hydroxyle, carboxyle ou NCO
- R¹ et R⁴ peuvent être égaux ou différents et représentent un résidu alkylène, de préférence un résidu alkylène ayant de 1 à 6 atomes de C ou un résidu arylène, de préférence un résidu phénylène.
- R² et R³ peuvent être égaux ou différents et représentent un résidu alkyle, de préférence un résidu alkyle ayant de 1 à 3 atomes de C ou un résidu aryle, de préférence un résidu phényle
- R⁵ représente 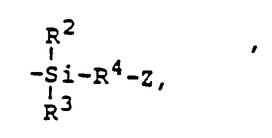 Z représentant X, Y ou R².

2. Laques selon la revendication 1, caractérisées en ce que les groupes X et Y représentent tous un groupe hydroxyle.

3. Laques selon la revendication 1 ou 2, caractérisées en ce que, dans la formule générale (I), n, X, R¹, R², R³, R⁴, et Y ont les significations suivantes:
- n représente une valeur numérique comprise entre 10 et 14, de préférence une valeur numérique comprise entre 11 et 13, particulièrement de préférence une valeur numérique comprise entre 11,5 et 12,5
- X et Y représentent tous deux un groupe hydroxyle
- R¹ et R⁴ représentent tous deux un groupe -CH₂-CH₂-CH₂-
- R² et R³ représentent tous deux un groupe méthyle

4. Laques selon l'une quelconque des revendications 1 à 3, caractérisées en ce qu'elles contiennent de 0,01 à 4,0, de préférence de 0,2 à 2,5 % en poids du composé de formule générale (I), respectivement du mélange de composés de formule générale (I), les indications de pourcentages pondéraux se rapportant à la teneur en matières solides totale de liant et d'agent de réticulation.

5. Laques selon l'une quelconque des revendications 1 à 4, caractérisées en ce qu'elles contiennent en tant que liant une résine de polylacrylate contenant des groupes hydroxyles ou un mélange de résines de poly-acrylate contenant des groupes hydroxyles.

6. Laques selon l'une quelconque des revendications 1 à 5, caractérisées en ce qu'elles contiennent en tant que liant une résine de polyester contenant des groupes hydroxyles, un mélange de résines de polyester contenant des groupes hydroxyles, une résine alkyde contenant des groupes hydroxyles ou un mélange de résines alkydes contenant des groupes hydroxyles.

7. Laques selon l'une quelconque des revendications 1 à 6, caractérisées en ce qu'elles contiennent en tant qu'agent de réticulation une résine aminoplaste, de préférence une résine mélamine-formaldéhyde ou un mélange de résines aminoplastes, respectivement un mélange de résines mélamine-formaldéhyde.

8. Laques selon l'une quelconque des revendications 1 à 7, caractérisées en ce qu'elles contiennent en tant qu'agent de réticulation un polyisocyanate ou un mélange de polyisocyanates.

9. Laques selon l'une quelconque des revendications 1 à 8, caractérisées en ce qu'elles ne contiennent pas de pigments ou en ce qu'elles ne contiennent que des pigments transparents.

10. Utilisation des laques selon l'une quelconque des revendications 1 à 9 en tant que laques de finition pour le laquage de carrosseries d'automobiles.

11. Utilisation des laques selon la revendication 9 en tant que laques claires pour le laquage de carrosseries d'automobiles.

12. Utilisation de composés de formule générale (I) ou d'un mélange de composés de formule générale (I) pour l'amélioration des propriétés de laquages de finition d'automobiles, la formule générale (I) étant 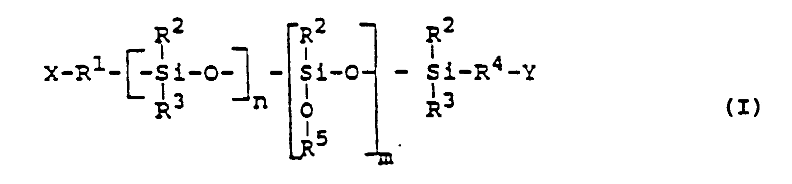 et n, m, X, R¹, R², R³, R⁴, R⁵ et Y ayant les significations suivantes:
- n représente une valeur numérique comprise entre 2 et 25, de préférence une valeur numérique comprise entre 5 et 15
- m représente une valeur numérique de 0 à 5
- X et Y peuvent être égaux ou différents et représentent un groupe hydroxyle, carboxyle ou NCO
- R¹ et R⁴ peuvent être égaux ou différents et représentent un résidu alkylène, de préférence un résidu alkylène ayant de 1 à 6 atomes de C ou un résidu arylène, de préférence un résidu phénylène
- R² et R³ peuvent être égaux ou différents et représentent un résidu alkyle, de préférence un résidu alkyle ayant de 1 à 3 atomes de C ou un résidu aryle, de préférence un résidu phényle
- R⁵ représente 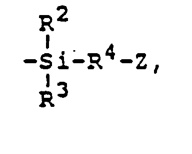 Z représentant X, Y ou R².
